# EUROPÄISCHE PATENTSCHRIFT

(11) **EP 4 267 687 B1**
(45) Veröffentlichungstag und Bekanntmachung des Hinweises auf die Patenterteilung: **11.03.2026**
(21) Anmeldenummer: 22754800.5
(22) Anmeldetag: 19.07.2022
(51) Int. Cl.: C09J 7/21, D01F 6/62, H01B 7/18, D01F 6/92, D01F 13/04

(54) **KLEBEBAND**
ADHESIVE TAPE
RUBAN ADHÉSIF

(30) Priorität: 15.12.2021 DE 202021106836 U
(43) Veröffentlichungstag der Anmeldung: 01.11.2023
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2022/070192
(87) Internationale Veröffentlichungsnummer: WO 2023/110170

(56) Entgegenhaltungen:
- EP-A2- 0 995 782
- BR-A- PI0 504 419
- DE-U1- 202019 100 588
- JP-A- 2005 206 967
- TW-U- M 594 621
- US-A1- 2012 315 473
- US-A1- 2016 177 138
- COROPLAST GLOBAL: "Recyceltes PET als Tr�germaterial", 16 March 2021 (2021-03-16), pages 1 - 4, XP093183901, Retrieved from the Internet <URL:https://www.coroplast-group.com/de/newsroom/artikel/recyceltes-pet-als-traegermaterial/> [retrieved on 20240710]
- MAJUMDAR ABHIJIT ET AL: "Circular fashion: Properties of fabrics made from mechanically recycled poly-ethylene terephthalate (PET) bottles", RESOURCES, CONSERVATION AND RECYCLING, ELSEVIER, AMSTERDAM, NL, vol. 161, 26 June 2020 (2020-06-26), XP086249740, ISSN: 0921-3449, [retrieved on 20200626], DOI: 10.1016/J.RESCONREC.2020.104915
- COROPLAST GLOBAL: "Coroplast 8937 STX - Kabelwickelband", 4 July 2025 (2025-07-04), pages 1 - 6, XP093292643, Retrieved from the Internet <URL:https://www.coroplast-tape.com/de/kabelwickelband/coroplast-8937-stx/> [retrieved on 20250703]
- TESA SE: "Tape Solutions for Automotive Electrical Distribution Systems", 31 July 2020 (2020-07-31), pages 1 - 5, XP093292639, Retrieved from the Internet <URL:https://www.tesa.com/en-in/files/download/266069,18,tesa-wire-harnessing-solutions.pdf> [retrieved on 20250703]

## Beschreibung

Die Erfindung betrifft die Verwendung eines Klebebandes als Wickelband zum Ummanteln von Kabeln in Automobilen.

Solche Klebebänder mit einem textilen Träger und einer ein- oder beidseitig aufgebrachten Klebebeschichtung sind allgemein bekannt und werden beispielhaft im Gebrauchsmuster DE 20 2019 100 588 U1 der Anmelderin beschrieben. An dieser Stelle ist der textile Träger zumindest teilweise unter Rückgriff auf biobasierte Polymere hergestellt. Dazu wird auf biobasierte Polymerfasern und/oder Polymerfäden zurückgegriffen. Diese können durch Extrusion hergestellt werden.

Der Rückgriff auf biobasierte Polymere zur Herstellung des textilen Trägers ist der Anforderung geschuldet, eine besonders ressourcenschonende Herstellung solcher Klebebänder zu erreichen. Dabei werden die biobasierten Polymere unter Rückgriff auf nachwachsende Rohstoffe auf Basis pflanzlicher Materialien hergestellt. Hier haben sich Pflanzen oder auch Milchsäure als günstig erwiesen. Momentan ist jedoch der Herstellungspreis solcher biobasierten Polymere (noch) nicht wettbewerbsfähig, so dass Alternativen für eine ressourcenschonende Herstellung gesucht werden.

Hieran ändert auch der nächstkommende Stand der Technik nach der Veröffentlichung vom 16. März 2021 seitens der Firma Coroplast mit dem Titel "Recyceltes PET als Trägermaterial" (Seiten 1 bis 4, gefunden im Internet gefunden im Internet: URL:https:/Iwww.coroplast-group.com/de/newsroom/artikel/ recyceltes-pet-als-traegermaterial/) grundsätzlich nichts. Denn an dieser Stelle wird zwar generell der Einsatz von recyceltem PET-Material als Trägermaterial für Klebebänder beschrieben. Ob der grundsätzliche Ersatz bestehender Klebebänder hierdurch möglich ist, bleibt offen.

Im weiteren Stand der Technik nach der EP 0 995 782 A2 geht es um ein Klebeband auf Basis eines mit Schmelzfasern thermofixierten Vlieses. Dabei können grundsätzlich auch Reißfasern als rezyklierte Kunststofffasern zusammen mit Schmelzfasern zum Einsatz kommen. Bei den fraglichen Reißfasern kann es sich um solche aus Polyester oder Polypropylen handelt. Außerdem wird im Beispiel 1 ein Vliesträger mit 80 % Polyesterreißfasern und 20 % Bikomponenten-Schmelzfasern beschrieben.

Durch die BR PI 0 504 419 A ist ein Klebeband zum Schutz von elektrischen Kabelbäumen in Kraftfahrzeugen bekannt. Dieses weist einen Vliesträger auf, der aus rezyklierten PET-Fasern hergestellt worden ist. Die PET-Fasern werden dabei aus Verpackungsmaterial für beispielsweise Flaschen gewonnen.

Schlussendlich beschäftigt sich die US 2012/315473 A1 ganz generell mit einem Klebeband bzw. einem selbstklebenden Stoff. Dabei kann eine Hauptschicht aus rezykliertem Polyethylenterephthalat hergestellt werden und einen entsprechenden textilen Träger definieren. Weitere Einzelheiten im Hinblick auf die Herkunft des Kunststoffrezyklates bleiben offen.

Der Erfindung liegt das technische Problem zugrunde, eine derartige Verwendung so weiter zu entwickeln, dass unter Berücksichtigung einer ressourcenschonenden Herstellung zugleich ein markt- und konkurrenzfähiges Produkt zur Verfügung gestellt wird.

Zur Lösung dieser technischen Problemstellung ist eine Verwendung nach Anspruch 1 vorgesehen.

Im Gegensatz zum Stand der Technik nach der DE 20 2019 100 588 U1 greift die Erfindung also nicht auf biobasierte Polymerfasern und/oder Polymerfäden zurück, sondern vielmehr Kunststoffrezyklatfasern und/oder Kunststoffrezyklatfäden bzw. Kunststofffasern und/oder Kunststofffäden, die zumindest teilweise auf Basis eines Kunststoffrezyklates hergestellt sind. Das Kunststoffrezyklat wird dabei aus der Aufbereitung von Kunststoffhohlkörpern nämlichPET (Polyethylenterephthalat)-Flaschen gewonnen. Dabei beträgt der Anteil des Kunststoffrezyklates in den Kunststofffasern und/oder Kunststofffäden vorteilhaft wenigstens 10 Gew.-%. Meistens liegt der Anteil des Kunststoffrezyklates bei 20 Gew.-% und mehr. Vorzugsweise werden sogar Anteile des Kunststoffrezyklates in den Kunststofffasern und/oder Kunststofffäden von wenigstens 30 Gew.-% beobachtet.

Darüber hinaus hat es sich als günstig erwiesen, wenn der Anteil des Kunststoffrezyklates in den Kunststofffasern und/oder Kunststofffäden maximal 80 Gew.-% beträgt. Vorzugsweise kann der Anteil des Kunststoffrezyklates bei 90 Gew.-% im Maximum liegen. Grundsätzlich ist es natürlich im Rahmen der Erfindung auch möglich, dass der Anteil des Kunststoffrezyklates in den Kunststofffasern und/oder Kunststofffäden bei 100 Gew.-% angesiedelt ist, d. h. dass die betreffenden Kunststofffasern und/oder Kunststofffäden vollständig aus dem Kunststoffrezyklat hergestellt sind.

In diesem Zusammenhang ist es sogar denkbar, dass das Kunststoffrezyklat überwiegend aus Polyethylentheraphthalat (PET) besteht, wohingegen als Neukunststoff PE (Polyethylen) zum Einsatz kommt und beide Kunststoffe für die Herstellung der Kunststofffasern und/oder Kunststofffäden miteinander gemischt werden. Im Allgemeinen wird jedoch so vorgegangen, dass sich der Neukunststoff und der Hauptbestandteil des Kunststoffrezyklates entsprechen. Auf den zuvor angesprochenen Beispielfall übertragen bedeutet dies, dass bei PET als Hauptbestandteil des Kunststoffrezyklates der gegebenenfalls zugesetzte Neukunststoff ebenfalls PET ist, um hierdurch dann insgesamt die Kunststofffasern und/oder Kunststofffäden herzustellen.

Das Kunststoffrezyklat enthält in der Regel wenigstens 70 Gew.-% PET sowie gegebenenfalls maximal 10 Gew.-% Nichtkunststoffe sowie den Rest Polyolefine. Bei den an dieser Stelle im Kunststoffrezyklat enthaltenen Polyolefinen kann es sich beispielhaft um PE (Polyethylen), PP (Polypropylen) oder andere handeln.

Im Rahmen einer bevorzugten Variante enthält das Kunststoffrezyklat wenigstens 80 Gew.-% PET und mindestens 15 Gew.-% Polyolefine sowie den Rest Nichtkunststoffe. Außerdem kann der Rest an Nichtkunststoffen weniger als 2 Gew.-% betragen. Das hängt letztlich von der Reinheit des Kunststoffrezyklates ab. Dieses kann generell auch nahezu 100 % PET enthalten.

Das heißt, nach vorteilhafter Ausgestaltung ist Gegenstand der Erfindung auch ein Klebeband, bei dem das eingesetzte Kunststoffrezyklat zur Herstellung der Kunststofffasern und/oder Kunststofffäden 100 Gew.-% aus der Aufbereitung von Kunststoffhohlkörpern gewonnenem PET enthält. Das betreffende PET wird dabei aus dem Rezyklat von PET-Flaschen gewonnen, und zwar indem zunächst einmal Störstoffe wie beispielsweise nicht metallische Bestandteile aufgrund ihrer höheren Dichte in einer Flüssigkeit über eine Schwergutfalle abgetrennt werden. Die in einer Suspension enthaltenen und abgeführten Kunststoffe, beispielsweise PE und/oder PP sowie PET, lassen sich anschließend als Suspension bei geringerer Dichte einer weiteren Aufbereitung zuführen. Im Rahmen der weiteren Aufbereitung kann die fragliche Suspension einem Hydrozyklon zugeführt werden, in welchem die unterschiedlichen Kunststoffe entsprechend ihrer Dichte in Schwimmgut und Sinkgut aufgeteilt werden. Dadurch lassen sich die Kunststoffe sortenrein und sauber einer erneuten Verwertung zuführen, wie dies grundsätzlich in der DE 10 2014 220 330 B4 beschrieben wird. Jedenfalls kann das Kunststoffrezyklat zur Herstellung der Kunststofffasern und/oder Kunststofffäden vollständig aus PET, das heißt zu 100 Gew.-%, bestehen, wobei das fragliche PET aus der Aufbereitung von Kunststoffhohlkörpern und insbesondere PET-Flaschen stammt und gewonnen worden ist.

Bei dem auf diese Weise aus den Kunststofffasern bzw. Kunststofffäden hergestellten textilen Träger handelt es sich erfindungsgemäß um ein Gewebe, Das heißt, der textile Träger kann sowohl einlagig bzw. einschichtig als auch mehrlagig bzw. mehrschichtig ausgelegt werden. Grundsätzlich kann der textile Träger zusätzlich auch mit einer ein- oder beidseitigen Kunststoffbeschichtung ausgerüstet werden. Typischerweise hat sich hier eine Rückseitenbeschichtung gegenüberliegend der Klebebeschichtung als besonders günstig erwiesen, um ein etwaiges Anhaften der Klebebeschichtung beim Aufrollen des Klebebandes am textilen Träger zu vermeiden.

Erfindungsgemäß ist das langgestreckte Gut mit dem fraglichen Klebeband ummantelt. Dabei wird das Klebeband zur Herstellung des langgestreckten Gutes als Längsumschlag um das Gut bzw. den Kabelsatz herumgeschlagen. Genauso gut ist es aber auch denkbar und wird von der Erfindung umfasst, dass zur Herstellung des langgestreckten Gutes das Klebeband wendelförmig bzw. spiralförmig um die Kabel des Kabelsatzes herumgewickelt wird.

Darüber hinaus weist das erfindungsgemäße Klebeband eine Temperaturbeständigkeit zumindest der Temperaturklasse T3 nach LV 312 (10/2009) auf. In diesem Zusammenhang drückt die Temperaturklasse T3 aus, dass die ummantelten Kabel und ihre Kabelisolierung durch den Einfluss des Klebebandes in Kombination mit der erhöhten Temperatur von 125 °C im Beispielfall der Temperaturklasse T3 ohne Versprödung über eine Dauer von 3000 Stunden im Minimum standhalten.

Darüber hinaus ist das erfindungsgemäße Klebeband so ausgelegt, dass seine mechanischen Eigenschaften nämlich der Abrieb lediglich und im Maximum um 20 %, vorteilhaft um maximal 10 % von denjenigen Klebebändern abweichen, deren Kunststofffasern und/oder Kunststofffäden vollständig aus Neumaterial bei gleichem Aufbau hergestellt sind.

Bei den genannten mechanischen Eigenschaften handelt es sich erfindungsgemäß um die Abriebbeständigkeit und die hiermit verbundenen Abriebklassen nach der Norm LV 312 (10/2009). Tatsächlich werden an dieser Stelle die Abriebklassen A bis G unterschieden, wie dies beispielhaft in der DE 20 2014 011 328 U1 im Detail beschrieben wird. Eine Abweichung des Abriebes des erfindungsgemäßen Klebebandes von im Maximum 20 % von einem gleich aufgebauten Klebeband, bei dem die Kunststofffasern und/oder Kunststofffäden zur Herstellung des textilen Trägers vollständig aus Neumaterial bzw. Neukunststoff bei gleichem Aufbau hergestellt sind, bedeutet nun, dass die für das Klebeband auf Basis des Neukunststoffes erreichte Abriebklasse überwiegend beibehalten wird bzw. allenfalls eine Reduzierung um eine Abriebklasse beobachtet wird. Beispielsweise ist ein Rückgang von der Abriebklasse D (hoher Abriebschutz) für das Klebeband aus dem Neukunststoff im Vergleich zum Klebeband auf Basis der Kunststoffrezyklatfasern und/oder Kunststoffrezyklatfäden gleichen Aufbaus, welches die Abriebklasse C erreicht, zu verzeichnen.

Im Unterschied zur Abriebfestigkeit ist dagegen im Hinblick auf die Luftdurchlässigkeit nach DIN EN ISO 9337 ebenso wie mit Blick auf die Geräuschdämpfung nach der zuvor bereits angegebenen LV 312 damit zu rechnen, dass das erfindungsgemäße Klebeband im Vergleich zu einem gleich aufgebauten Klebeband mit einem textilen Träger aus Neukunststoff keine Abweichungen zeigt. Das heißt, der strukturelle flächenmäßige Aufbau des erfindungsgemäßen Klebebandes entspricht demjenigen eines gleich aufgebauten Klebebandes aus Neukunststoff.

Dementsprechend kann das erfindungsgemäße Klebeband in praktisch sämtlichen Anwendungen insbesondere als Wickelband zum Ummanteln von Kabeln in Automobilen die bisher eingesetzten Klebebänder auf Basis von Neukunststoff substituieren, und zwar ohne dass an dieser Stelle signifikante Verschlechterungen des Ergebnisses beobachtet werden. Hierin sind die wesentlichen Vorteile zu sehen.

Die grundsätzliche Herstellung von Kunststofffasern und/oder Kunststofffäden auf Basis eines Kunststoffrezyklates ist zwar generell ebenso wie ihr Einsatz bekannt, wozu nur beispielhaft auf die WO 2013/106392 A2 verwiesen sei. Hier geht es um ein Gewebe aus zwei unterschiedlichen Fasertypen, wobei auch Kunststofffasern auf Basis eines Kunststoffrezyklates zum Einsatz kommen. Um solche Kunststoffrezyklate zu gewinnen, wird allgemein gebrauchtes Kunststoffmaterial zunächst gesammelt und dann in der Regel geschreddert. Außerdem sind in diesem Zusammenhang meistens noch Reinigungsprozesse denkbar, um etwaige Verschmutzungen auszuschleusen. Als Basis für die Herstellung solcher Kunststoffrezyklate können Einweg-Kunststoffflaschen dienen, wie dies grundsätzlich in der US 5,554,657 A beschrieben wird. Tatsächlich bestehen solche Kunststoff-Einwegflaschen überwiegend aus PET, welches zur Herstellung der eigentlichen Flaschen zur Anwendung kommt. Darüber hinaus sind in dem Rezyklat typischerweise noch Polyolefine enthalten, die von Verschlusskappen aus Polypropylen oder auch solchen aus Polyethylen resultieren. Daneben finden sich in dem Rezyklat unter anderem auch andere Kunststoffe, die von etwaigen Etiketten her resultieren.

Das auf diese Weise gewonnene Kunststoffrezyklat wird regelmäßig geschreddert, um anschließend durch Extrusion verarbeitbares Granulat zur Verfügung zu stellen. Dieses Granulat kann dann nach üblichen Methoden zu den Kunststofffasern bzw. Kunststofffäden verarbeitet werden, beispielsweise durch Extrusion unter Rückgriff auf herkömmliche Vorgehensweisen.

Es versteht sich, dass das auf diese Weise hergestellte Gewebeauf ganz unterschiedliche Art und Weise produziert werden kann..

In diesem Fall geht die Erfindung so vor, dass die Kettfäden des Trägers als Kunststoffrezyklatfäden und die Schussfäden des Trägers als Neukunststofffäden ausgebildet sind.Auf diese Weise wird erreicht, dass die primär die Abriebfestigkeit beeinflussenden Schussfäden gleich aufgebaut sind wie bei einem Klebeband mit einem Träger aus Neukunststoff, so dass vergleichbare Werte für die Abriebfestigkeit beobachtet werden. Zugleich ist ein solches Klebeband mit einer verbesserten Handeinreißbarkeit im Vergleich zu einem gleich aufgebauten Klebeband aus Neukunststoff ausgerüstet, weil die für die Handeinreißfähigkeit primär verantwortlich zeichnenden Kettfäden als Kunststoffrezyklatfäden mit etwas geringerer Reißfestigkeit im Vergleich zu Kettfäden aus Neukunststofffäden ausgebildet sind.

Damit wird deutlich, dass durch die gezielte Auswahl und Mischung der Kunststoffrezyklatfasern bzw. Kunststoffrezyklatfäden mit den Neukunststofffasern bzw. Neukunststofffäden einzelne gewünschte Eigenschaften des auf diese Weise hergestellten Klebebandes gezielt erreicht bzw. vertieft werden können.

## Patentansprüche

1. Verwendung eines Klebebandes als Wickelband zum Ummanteln von Kabeln in Automobilen, wobei
das Klebeband mit einem Gewebe auf Basis von Kunststofffasern und/oder Kunststofffäden und mit einer ein- oder beidseitig aufgebrachten Klebebeschichtung ausgerüstet ist, wobei ferner
das Gewebe mit als Kunststoffrezyklatfäden ausgebildeten Kettfäden und Neukunststofffäden als Schussfäden ausgebildet ist, wobei ferner
die Kunststoffrezyklatfäden zumindest teilweise auf Basis eines aus der Aufbereitung von PET-Flaschen gewonnenen Kunststoffrezyklates hergestellt sind, wobei weiter
das Klebeband eine Temperaturbeständigkeit zumindest der Temperaturklasse T3 nach LV 312 (10/2009) aufweist, wobei darüber hinaus
das Klebeband eine Abweichung des Abriebes nach LV 312 (10/2009) von im Maximum 20 % von
einem gleich aufgebauten Klebeband, bei dem die Kunststofffasern und/oder Kunststofffäden zur Herstellung des Gewebes vollständig aus Neumaterial bzw. Neukunststoff bei gleichen Aufbau hergestellt sind, aufweist, und wobei das Klebeband in einem Automobil als Längsumschlag um einen Kabelsatz herumgeschlagen oder wendelförmig um einen Kabelsatz herumgewickelt wird.

2. Verwendung nach Anspruch 1, **dadurch gekennzeichnet, dass** der Anteil des Kunststoffrezyklates in den Kunststofffasern und/oder Kunststofffäden wenigstens 20 Gew.-% und mehr beträgt.

3. Verwendung nach Anspruch 2, **dadurch gekennzeichnet, dass** der Anteil des Kunststoffrezyklates in den Kunststofffasern und/oder Kunststofffäden wenigstens 30 Gew.-% beträgt.

4. Verwendung nach Anspruch 1, **dadurch gekennzeichnet, dass** der Anteil des Kunststoffrezyklates in den Kunstofffasern und/oder Kunststofffäden 90 Gew.-% im Maximum beträgt.

5. Verwendung nach Anspruch 1, **dadurch gekennzeichnet, dass** sich der
Neukunststoff und der Hauptbestandteil des Kunststoffrezyklates entsprechen.

6. Verwendung nach einem der Ansprüche 1 bis 5, **dadurch gekennzeichnet,**
**dass** das Kunststoffrezyklat wenigstens 70 Gew.-% PET sowie gegebenenfalls maximal 10 Gew.-% Nichtkunststoffe sowie den Rest Polyolefine und vorzugsweise wenigstens 80 Gew.-% PET und mindestens 15 Gew.-% Polyolefine sowie den Rest Nichtkunststoffe enthält.

7. Verwendung nach einem der Ansprüche 1 bis 5, **dadurch gekennzeichnet,**
**dass** das Kunststoffrezyklat 100 Gew.-% PET enthält.

8. Verwendung nach einem der Ansprüche 1 bis 6, **dadurch gekennzeichnet,**
**dass** der Rest an Nichtkunststoffen weniger als 2 Gew.-% beträgt.

## Claims

1. Use of an adhesive tape as wrapping tape for sheathing cables **in** automobiles, wherein
the adhesive tape is furnished with a fabric having a base of synthetic fibres and/or synthetic threads and with an adhesive coating applied to one or both sides thereof, wherein further
the fabric is constructed with recycled synthetic material fibres embodied as warp threads, and new plastic fibres embodied as weft threads, wherein further
the recycled synthetic material fibres are at least partly manufactured on the basis of a recycled synthetic material recovered from the processing of PET bottles, wherein further
the adhesive tape has a temperature stability of at least temperature class T3 according to LV 312 (10/2009), wherein further
the adhesive tape deviates in terms of abrasion according to LV 312 (10/2009) by not more than 20 % compared with an identically constructed adhesive tape **in** which the synthetic fibres and/or synthetic threads for producing the fabric are manufactured entirely from new material and/or new plastic with the identical structure, and wherein
the adhesive tape **in** an automobile is wound around a cable harness as a lengthwise wrapping or around a cable harness **in** a serpentine or spiral arrangement.

2. Use according to Claim 1, **characterized in that** the fraction of recycled synthetic material in the synthetic fibres and/or synthetic threads is at least 20 % by weight and more.

3. Use according to Claim 2, **characterized in that** the fraction of recycled synthetic material in the synthetic fibres and/or synthetic threads is at least 30 % by weight.

4. Use according to Claim 1, **characterized in that** the fraction of recycled synthetic material in the synthetic fibres and/or synthetic threads is not more than 90 % by weight.

5. Use according to Claim 1, **characterized in that** the new plastic and the primary component of the recycled synthetic material are correlated to each other.

6. Use according to any one of Claims 1 to 5, **characterized in that** the recycled synthetic material contains at least 70 % by weight PET and optionally up to 10 % by weight non-synthetics, the remainder being polyolefins, and preferably at least 80 % by weight PET and at least 15 % by weight polyolefins, the remainder being non-synthetics.

7. Use according to any one of Claims 1 to 5, **characterized in that** the recycled synthetic material contains 100 % by weight PET.

8. Use according to any one of Claims 1 to 6, **characterized in that** the remainder of non-synthetics amounts to less than 2 % by weight.

## Revendications

1. Utilisation d'une bande adhésive en tant que bande d'enroulement pour envelopper des câbles dans le secteur automobile, sachant que
la bande adhésive est dotée d'un tissu à base de fibres de matière plastique et/ou de fils de matière plastique et d'un revêtement adhésif appliqué d'un ou des deux côtés, sachant en plus que
le tissu est constitué de fils de chaîne constitués sous la forme de fils de produit recyclé de matière plastique et de fils de matière plastique neufs en tant que fils de trame, sachant en plus que
les fils de produit recyclé de matière plastique sont fabriqués au moins en partie à base d'un produit recyclé de matière plastique obtenu à partir du traitement de bouteilles en polyéthylène (PET), sachant par ailleurs que
la bande adhésive comporte une résistance thermique d'au moins la catégorie de températures T3 selon LV 312 (10/2009), sachant par ailleurs que
la bande adhésive comporte un écart de l'abrasion selon LV 312 (10/2009) au maximum de 20 % par rapport à une bande adhésive de même structure, pour laquelle les fibres de matière plastique et/ou les fils de matière plastique pour la fabrication du tissu sont complètement fabriqués à partir de matériau neuf ou de matière plastique neuve pour la même structure, et sachant que
la bande adhésive est enroulée autour d'un ensemble de câbles ou en forme de spirale autour d'un ensemble de câbles dans un véhicule automobile en tant qu'enveloppe longitudinale.

2. Utilisation selon la revendication 1, **caractérisée en ce que** la part de produit recyclé de matière plastique dans les fibres de matière plastique et/ou les fils de matière plastique représente au moins 20 % / poids et plus.

3. Utilisation selon la revendication 2, **caractérisée en ce que** la part de produit recyclé de matière plastique dans les fibres de matière plastique et/ou les fils de matière plastique représente au moins 30 % / poids.

4. Utilisation selon la revendication 1, **caractérisée en ce que** la part de produit recyclé de matière plastique dans les fibres de matière plastique et/ou les fils de matière plastique représente au maximum 90 % / poids.

5. Utilisation selon la revendication 1, **caractérisée en ce que** la matière plastique neuve et le composant principal du produit recyclé de matière plastique s'accordent.

6. Utilisation selon l'une quelconque des revendications 1 à 5, **caractérisée en ce que** le produit recyclé de matière plastique contient au moins 70 % / poids de PET ainsi que le cas échéant au maximum 10 % / poids de matières non synthétiques et le reste de polyoléfine et de préférence au moins 80 % / poids de PET et au moins 15 % / poids de polyoléfine et le reste de matières non synthétiques.

7. Utilisation selon l'une quelconque des revendications 1 à 5, **caractérisée en ce que** le produit recyclé de matière plastique contient 100 % / poids de PET.

8. Utilisation selon l'une quelconque des revendications 1 à 6, **caractérisée en ce que** le reste des substances non synthétiques représente moins de 2 %/poids.
